# EUROPEAN PATENT SPECIFICATION

(11) **EP 0 880 663 B1**
(45) Date of publication and mention of the grant of the patent: **23.04.2003**
(21) Application number: 97904719.8
(22) Date of filing: 13.02.1997
(51) Int. Cl.: F25D 17/06, A61J 1/00, A61M 5/44

(54) **FREEZER FOR A LIQUID**
GEFRIEREINRICHTUNG FÜR EINE FLÜSSIGKEIT
CONGELATEUR POUR LIQUIDE

(30) Priority: 13.02.1996 SE 9600508
(43) Date of publication of application: 02.12.1998
(73) Proprietor: INGENJÖRSFIRMAN PER-OSKAR PERSSON AB, S-252 33 Helsingborg (SE)
(72) Inventor: PERSSON, Per-Oskar, S-252 33 Helsingborg (SE)
(74) Representative: Berglund, Gustav Arthur
(86) International application number: SE9700221
(87) International publication number: WO97030317

(56) References cited:
- GB-A- 2 014 583
- US-A- 3 480 015
- US-A- 3 586 097
- US-A- 4 537 034
- US-A- 5 297 234

## Description

The present invention generally relates to a freezer with receptacles, for cooling a liquid in the receptacles and particularly to a freezer for blood plasma. More precisely, the present invention relates to a freezer comprising a housing, which contains a cooling battery for cooling a gas, a means for generating a flow of the cooled gas, and a device for generating jets of the flow of the cooled gas which are directed towards the outside of the receptacle. A freezer according to the preamble of claim 1 is known from document US-A-5 297 234.

It is known from experience that blood plasma should be frozen as soon as possible after being drawn. The freezing process itself should occur quickly enough for the plasma to reach a temperature of about -30°C within an hour. After freezing, the plasma is normally stored at a temperature of about -70°C while awaiting transportation to, for example, a processing facility.

Previously, the plasma was stored either in plastic bags or in round plastic bottles during freezing. Recently, rather than using round plastic bottles, it has become common to use essentially parallelepipedal plastic receptacles, so-called vials, for handling plasma from the drawing location to the processing location. These vials have a rectangular cross-section measuring about 40 x 100 mm. Because the vials are as thin as 40 mm, it has become possible to lower the temperature of the plasma at the desired rate without having to resort to extremely low cooling temperatures, such as those obtained from liquid nitrogen.

In a first method for freezing the plasma, the plasma-filled receptacles have been lowered into an alcohol bath with a temperature of about -40°C. In order to speed up the freezing process, the alcohol is caused to circulate in the bath.

In a second method for freezing the plasma, the plasma-filled receptacles are placed in metal blocks having holes with the same cross-sectional shape as the receptacles. In addition, the metal blocks have channel systems, in which a cooling medium is circulating.

A third, recently developed, method for freezing the plasma utilises several plastic shells with flexible walls. When a certain number of plasma-filled receptacles are in place, each in its own plastic shell, the pressure in a liquid surrounding them is increased, so that good contact is achieved between the liquid and the plasma-filled receptacles. The surrounding liquid is also used as a cooling medium.

The first method is environmentally dangerous and may cause fire because alcohol is used as a cooling medium. The second method provides relatively poor thermal transmittance from the receptacles to the metal block and, in addition, the receptacles tend to freeze to the holes of the metal block. The third method requires a comparatively complicated freezer and also requires that, on each freezing occasion, every plastic shell contains a receptacle before the freezing can start.

Yet another method, which obviates some of the drawbacks of the three methods described above, is disclosed in US-A-5 297 234. In this method, cold air jets are generated and directed towards a specially formed blood receptacle. However, the device used for carrying out the method is of complicated construction, as is the blood receptacle used, and leads to hygienic risks, poor efficiency, and poor adaptability to conventionally utilised receptacles or bags for primarily blood or blood components.

A first object of the invention is to enable the freezing of a liquid in a receptacle without the drawbacks of the known methods, i.e. in a simple and environmentally friendly process, particularly with the possibility of utilising blood receptacles or blood bags, and without any hygiene risk or risk of the receptacle freezing and getting stuck.

A second object is to enable the freezing of the liquid in one receptacle essentially independently of the freezing of the liquid in another receptacle, i.e. in a freezer according to the invention, it should be possible to insert and remove the receptacles individually and at any time during the operation of the freezer.

The first object is achieved by the freezer according to the invention having the features stated in the appended claim 1.

The fact that cold air jets of sufficient air speed provide a sufficiently high heat transfer coefficient at the surface of the receptacle is thus utilised to meet the basic requirement of rapid freezing, i.e. within about 60 minutes, to a predetermined temperature, preferably -30°C.

In order to make the process economically viable, the air is suitably recirculated via the cooling battery. In particular, if the liquid consists of blood plasma, a heat transfer coefficient at the receptacle surfaces concerned may need to be larger than 100 W/m^{2·} °C but does not need to be larger than 200 W/m^{2·} °C, which is achieved by the air speed being adjusted accordingly.

However, it has to be emphasised that the heat transfer coefficient does not have to be larger than is necessary for it to be optimised in relation to the thermal conduction resistance of the liquid, particularly the blood plasma. However, since the preferred receptacles are relatively thin, the thermal conduction resistance of the liquid is of limited importance. In general, the optimisation implies that the heat transfer coefficient does not need to be made larger than necessary for the thermal conduction in the liquid to become the limiting factor for the rapid cooling of the liquid.

In the freezer the jet device comprises a plurality of shells, each completely surrounding a receptacle inserted into each shell with the exception of a first opening for inserting the receptacle and a second opening for discharging the flow of gas resulting from the jets which are directed towards the outside of the receptacle, and each shell having holes in all its side walls in areas directly opposite a receptacle inserted into the shell, i.e. distributed over essentially the whole surface of the shell between the first opening and the second opening, for directing the jets towards the outside of the receptacle.

Because air is used as a cooling medium, the freezer is very simple, reliable in service, and environmentally friendly.

In the preferred embodiment of the freezer according to the invention, each shell has a valve for increasing the cross-section of the second opening when a receptacle is being inserted into the shell, so that the air resistance through each shell is essentially independent of whether the shell contains a receptacle or not. As a result of this construction, the cooling of a receptacle in a shell in the freezer will be effected in the same way whether the other shells in the freezer contain receptacles or not. Thus, it will be possible to remove a receptacle from the freezer as soon as the liquid in the receptacle has reached the desired temperature, without the cooling of other possible receptacles in the freezer being affected.

For monitoring purposes an embodiment of the freezer according to the invention may suitably have an indicator for indicating with respect to each shell whether it is empty or contains a receptacle, and, in the latter case, for indicating when the receptacle has been in the shell for a predetermined period of time and thus has reached a certain temperature. Alternatively, a directly temperature-sensitive indicator may be used.

An embodiment of the invention will now be described in more detail with reference to the accompanying drawings, in which:
Fig. 1 is a top view of an embodiment of a freezer according to the invention,
Fig. 2 is a cross-sectional view along the line II-II in Fig. 1,
Fig. 3 is a front view of one of several shells for one receptacle each, which are part of the freezer according to Figs 1 and 2,
Fig. 4 is a side view of the shell in Fig. 3,
Fig. 5 is a cross-sectional view along the line V-V in Fig. 4,
Fig. 6 is a cross-sectional view of a valve associated with each shell.

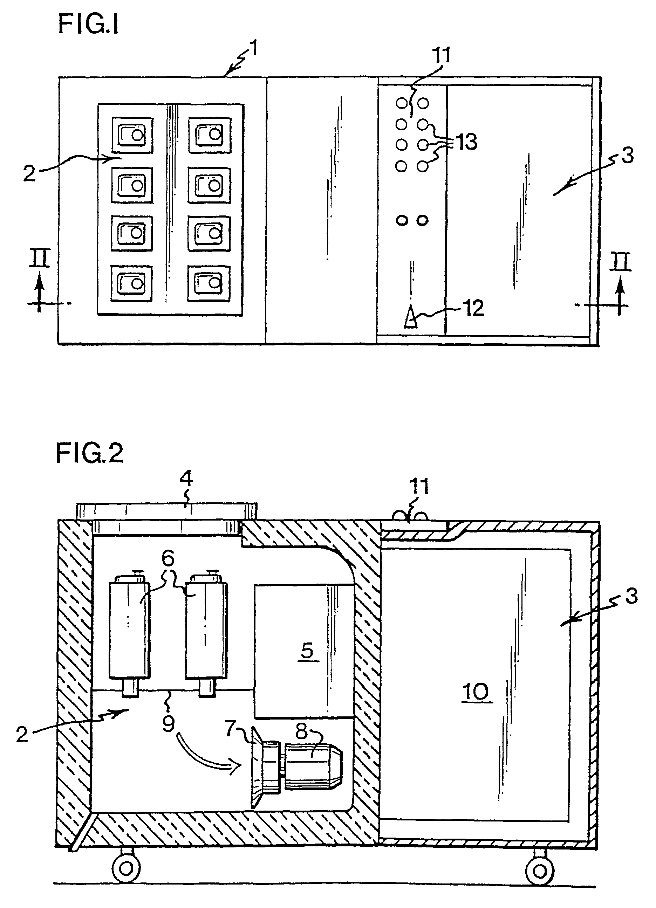

The embodiment shown in Figs 1 and 2 of a freezer according to the invention comprises a housing 1 with a first chamber 2, which is heat-insulated, and an adjacent chamber 3, which does not have to be heat-insulated but may advantageously be soundproof. A cover 4, which is also heat-insulated, seals an opening into the chamber 2, which contains a cooling battery 5, a plurality of shells 6, and a fan 7 with a fan motor 8. The shells 6 are installed in a partition wall 9 in such a way that the fan 7 circulates the air in the chamber 2 through the cooling battery 5 and thence through each of the shells 6 back to the fan 7.

The cooling battery 5 is part of a refrigerating machine 10, which is contained in the chamber 3 and which is of a conventional type with a compressor and a condenser. The latter may advantageously be water-cooled, which results in a low sound level and no heat emission to the space where the freezer is located.

A control panel 11 with a change-over switch 12 for turning on and turning off the current to the freezer and several indicator lights 13 are located on the top of the freezer.

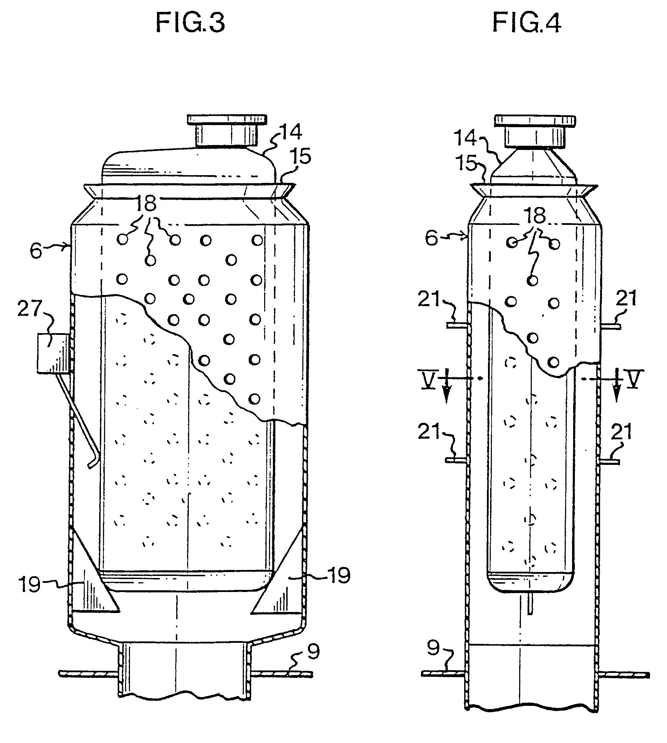

A shell 6 will now be described in more detail with reference to Figs 3-6. These figures show a shell 6 and a receptacle 14 or a vial of the type that is now usually used for freezing blood plasma. The receptacle 14 is essentially parallelepipedal and measures approximately 40 x 100 x 250 mm and is usually made of plastic.

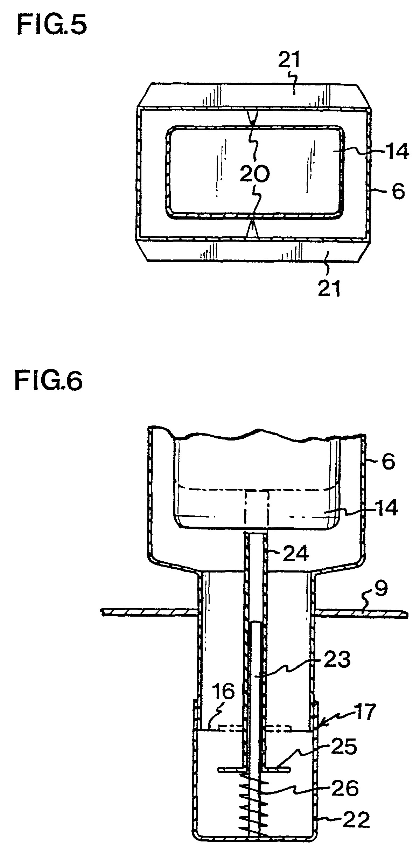

The shell 6 has the form of a sleeve with a first opening 15 at its upper end, the opening 15 having essentially the same cross-sectional dimensions as the receptacle 14 or at least as the upper part of the receptacle, so that when a receptacle 14 is inserted into the shell 6, the opening 15 is practically completely sealed. Furthermore, the shell 6 has a second opening 16 at its lower end. This single second opening 16 contains a valve 17 shown in Fig. 6.

The shell 6 has somewhat larger cross-sectional dimensions than the receptacle 14, so that a free space is formed between the outside of the receptacle 14 and the inside of the shell 6. In each side wall of the shell 6, there are several holes 18 in areas directly opposite a receptacle 14 inserted into the shell 6. Furthermore, the shell 6 is fixedly attached to the partition wall in such a way that air can flow from one side of the partition wall 9 to the other side through the shell 6 only.

In its inserted position in the shell 6, the receptacle 14 is kept in place partly by two shoulders 19, against which the lower end of the receptacle 14 abuts, partly by the opening 15 itself. Two vertical bars 20 are also fixedly attached to the inside of the shell 6 opposite each other in order to abut against the two wider sides of the receptacle 14. As a result, the receptacle 14 is prevented from expanding in connection with the freezing of a liquid inside it. For the same reason, the shell 6 may have exterior horizontal reinforcement bars 21 on the same walls as the vertical reinforcement bars 20.

The valve 17 shown in more detail in Fig. 6 comprises a U-shaped clamp 22, whose legs are fixedly connected to the lower end of the shell 6. A rod 23 is fixedly attached to the clamp 22 and extends into the second opening 16 of the shell 6. A tubular piece 24, which is closed at the top, is pushed down over the rod 23 and is displaceable up and down over it. At its lower end the tubular piece 24 has a plate 25, and between the plate 25 and the clamp 22 there is a helical compression spring 26.

When there is no receptacle 14 inserted into the shell 6, the plate 25 is pressed up into the second opening by the compression spring 26. However, when a receptacle 14 is inserted in the shell 6, the bottom of the receptacle 14 presses the tubular piece 24 down, so that the plate 25 is pressed down under the second opening 16. The size of the cross-section of the opening 16 will thus vary depending on whether the shell 6 contains a receptacle 14 or not. The difference between these cross-sections is determined so that the air resistance through the shell 6 is independent of whether there is a receptacle 14 in the shell 6 or not.

As is shown in Fig. 3, the shell 6 may have a transducer 27, e.g. a microswitch, which will indicate whether the shell 6 contains a receptacle 14 or not. In this case, there can be an indicator light 13 for every shell 6, indicating whether the shell 6 is empty or whether it contains a receptacle 14. The freezer according to the invention may also comprise timing circuits, which cause the indicator light 13 of each shell, for instance, to blink when a receptacle 14 has been in the shell 6 for a predetermined length of time, which has been determined to be sufficient for the freezing of the liquid in the receptacle 14 to the intended temperature.

The freezer may also comprise a transducer for the temperature in the chamber 2 and a corresponding indicator or indicator light on the control panel 11. In this way, the operator can get the go-ahead for using the freezer. The freezer may also contain a pressure transducer on each side of the partition wall 9 and a corresponding indictor or indicator light on the control panel 13 for indicating that there is sufficient pressure difference, so that the speed of the air which passes through the holes 18 in one of the shells 6 with a receptacle 14 inserted will be high enough for the required heat transfer coefficient to be achieved at the external surface of the receptacle 14. Finally, the freezer may also advantageously comprise a switch, which switches off the fan motor 8 when the cover 4 is opened, so that cooled air does not pass unnecessarily out of the chamber 2.

When the change-over switch 12 has been turned and the freezer is ready to be used, as indicated by the indication on the control panel 11 of a sufficiently low temperature inside the chamber 2 and a sufficient pressure drop over the partition wall 9, an arbitrary number of receptacles 14 may be placed each in its own shell 6, after which the chamber 2 is sealed with the cover 4. During the treatment time for receptacles 14 which have previously been inserted, further receptacles 14 may be inserted if empty shells 6 are available, which will be indicated on the control panel 11. As soon as a receptacle 14 has been in the freezer for the required period of time, this will be indicated on the control panel and the receptacle 14 may then be removed immediately and replaced by a new receptacle 14. By virtue of the valve 17 on each shell 6, the treatment of a receptacle 14 in a shell 6 will be independent of whether the other shells 6 in the freezer contain a receptacle 14 or not.

Normally, the receptacles 14 are slightly cone-shaped, i.e. they become somewhat narrower towards the bottom. As a result of the vertical reinforcement bars 20, the receptacle 14 will keep its shape during the freezing, and thus the slightly conical shape facilitates the removal of the receptacle 14 from the shell 6.

The freezer according to the invention is also easily adaptable to various kinds of receptacles, shape-permanent ones, e.g. plastic bottles, as well as flexible ones, e.g. plastic bags. For example, the shells 6 or at least their upper parts, preferably above the partition wall 9, can be made removable and therefore exchangeable for adaptation to receptacles of various shapes. By the use of air-permeable cases, whose shape corresponds to that of the receptacles 14 and which therefore fit into the shells 6, liquids can be frozen in plastic bags, which can be placed each in its own case. These cases may consist of plastic or metal, e.g. a metal net, and be designed to remain in the respective shells 6 or even be permanently connected to their own shell 6, in which case only the plastic bag is inserted or removed. Alternatively, they may be designed to be inserted into the shell 6 and removed from the shell with the plastic bag.

The adaptability described above also makes it possible in the freezer according to the invention to utilise the type of receptacles which are normally used for the current liquid in a processing step previous or subsequent to the freezing, so that the re-drawing of the liquid may be avoided.

## Claims

1. A freezer with receptacles (14), for cooling a liquid in the receptacles (14), comprising a housing (1), which contains a cooling battery (5) for cooling a gas, a means (7) for generating a flow of the cooled gas and a device for generating jets of the flow of the cooled gas, which are directed towards the outside of the receptacles (14), **characterised in that** the jet generating device comprises a plurality of shells (6), each of the receptacles being inserted into one of the shells, each of the shells completely surrounding one of the receptacles (14) with the exception of a first opening (15) for inserting the respective receptacle and a second opening (16) for discharging the flow of gas resulting from the jets directed towards the outside of the respective receptacle, and each shell having holes (18) in all its side walls in areas directly opposite to the respective receptacle inserted into the shell for directing the jets towards the outside of the respective receptacle, the shells being installed in a partition wall (9) in such a way that the gas flow generating means (7) circulates the gas in the chamber through the cooling battery (5) and thence through each of the shells back to the gas flow generating means (7).

2. A freezer as set forth in claim 1, **characterised in that** each of the shells (6) has a valve (17) for increasing the cross-section of the second opening (16) in connection with the insertion of one of the receptacles (14) into the respective shell (6), so that the flow of gas through each of the shells is essentially independent of whether the shell contains one of the receptacles or not.

3. A freezer as set forth in claim 1 or 2, **characterised in that** the first opening (15) becomes substantially sealed by one of the receptacles (14) inserted into it.

4. A freezer as set forth in any one of claims 1-3, wherein the receptacles (14) have an essentially rectangular cross-section, **characterised in that** each of the shells (6) has reinforcement bars (20) for abutting against the oppostie wide sides of the respective receptacle (14).

5. A freezer as set forth in claim 2, **characterised by** an indicator (13) for indicating for each of the shells (6) whether it is empty or contains one of the receptacles (14), and in the latter case, for indicating when the receptacle has been in the shell for a predetermined period of time.

6. A freezer as set forth in any one of claims 1-5, **characterised by** a means for turning off the means (7) for creating the flow of gas during the insertion of one of the receptacles (14) into the freezer or the removal of one of the receptacles from the freezer.

7. A freezer as set forth in any one of claims 1-6, **characterised by** a temperature transducer for the gas cooled by the cooling battery (5) and an indicator for indicating when a predetermined temperature has been achieved.

8. A freezer as set forth in any one of claims 1-7, **characterised by** a pressure transducer for the pressure drop over the shells (6) for indicating when a predetermined pressure drop has been achieved.

9. A freezer as set forth in any one of claims 1-8, **characterised by** an air-permeable case, into which a plastic bag containing a liquid is insertable and which case is in turn insertable into at least one of the shells (6) as one of the receptacles.

10. A freezer as set forth in any one of claims 1-9, **characterised in that** least one of the shells (6) is completely or partially removable from the housing for being exchanged for another shell.

## Patentansprüche

1. Gefrierapparat mit Behältern zum Kühlen einer Flüssigkeit in den Behältern (14), der ein Gehäuse (1), das einen Kühlblock (5) zum Kühlen eines Gases enthält, eine Einrichtung (7) zum Erzeugen eines Stroms des gekühlten Gases sowie eine Vorrichtung zum Erzeugen von Strahlen des Stroms des gekühlten Gases, die auf die Außenseite der Behälter (14) gerichtet sind, umfasst, **dadurch gekennzeichnet, dass** die Strahlerzeugungsvorrichtung eine Vielzahl von Hülsen (6) umfasst, wobei jeder der Behälter in eine der Hülsen eingeführt ist und jede der Hülsen einen der Behälter (14) mit Ausnahme einer ersten Öffnung (15) zum Einführen des jeweiligen Behälters und einer zweiten Öffnung (16) zum Ausstoßen des Stroms von Gas, der durch die Strahlen entsteht, die auf die Außenseite des jeweiligen Behälters gerichtet sind, vollständig umgibt, und jede Hülse Löcher (18) in all ihren Seitenwänden in Bereichen direkt gegenüber dem jeweiligen Behälter, der in die Hülse eingeführt ist, aufweist, um die Strahlen auf die Außenseite des jeweiligen Behälters zu richten, wobei die Hülsen in einer Trennwand (9) so installiert sind, dass die Gasstrom-Erzeugungseinrichtung (7) das Gas in der Kammer durch den Kühlblock (5) und dann durch jede der Hülsen zurück zu der Gasstrom-Erzeugungseinrichtung (7) zirkulieren lässt.

2. Gefrierapparat nach Anspruch 1, **dadurch gekennzeichnet, dass** jede der Hülsen (6) ein Ventil (17) zum Vergrößern des Querschnitts der zweiten Öffnung (16) im Zusammenhang mit dem Einführen eines der Behälter (14) in die jeweilige Hülse (6) aufweist, so dass der Strom von Gas durch jede der Hülsen im Wesentlichen unabhängig davon ist, ob die Hülse einen der Behälter enthält oder nicht.

3. Gefrierapparat nach Anspruch 1 oder 2, **dadurch gekennzeichnet, dass** die erste Öffnung (15) durch einen der Behälter (14), der in sie eingeführt ist, im Wesentlichen verschlossen wird.

4. Gefrierapparat nach einem der Ansprüche 1-3, wobei die Behälter (14) einen im Wesentlichen rechteckigen Querschnitt haben, **dadurch gekennzeichnet, dass** jede der Hülsen (6) Verstärkungsstege (20) aufweist, die an den einander gegenüberliegenden breiten Seiten des jeweiligen Behälters (14) anliegen.

5. Gefrierapparat nach Anspruch 2, **gekennzeichnet durch** eine Anzeigeeinrichtung (13), die für jede der Hülsen (6) anzeigt, ob sie leer ist oder einen der Behälter (14) enthält, und in letzterem Fall anzeigt, wenn der Behälter über einen vorgegebenen Zeitraum in der Hülse gewesen ist.

6. Gefrierapparat nach einem der Ansprüche 1-5, **gekennzeichnet durch** eine Einrichtung zum Abschalten der Einrichtung (7) zum Erzeugen des Stroms von Gas während des Einführens eines der Behälter (14) in den Gefrierapparat oder des Herausnehmens eines der Behälter aus dem Gefrierapparat.

7. Gefrierapparat nach einem der Ansprüche 1-6, **gekennzeichnet durch** einen Temperaturwandler für das von dem Kühlblock (5) gekühlte Gas und eine Anzeigeeinrichtung, die anzeigt, wenn eine vorgegebene Temperatur erreicht worden ist.

8. Gefrierapparat nach einem der Ansprüche 1-7, **gekennzeichnet durch** einen Druckwandler für das Druckgefälle über die Hülsen (6), der anzeigt, wenn ein vorgegebenes Druckgefälle erreicht worden ist.

9. Gefrierapparat nach einem der Ansprüche 1-8, **gekennzeichnet durch** eine luftdurchlässige Umhüllung, in die ein Kunststoffbeutel, der eine Flüssigkeit enthält, eingeführt werden kann, wobei die Umhüllung ihrerseits in wenigstens eine der Hülsen (6) als einer der Behälter eingeführt werden kann.

10. Gefrierapparat nach einem der Ansprüche 1-9, **dadurch gekennzeichnet, dass** wenigstens eine der Hülsen (6) zum Austauschen gegen eine andere Hülse vollständig oder teilweise aus dem Gehäuse entnommen werden kann.

## Revendications

1. Congélateur comportant des réceptacles (14) pour refroidir un liquide dans les réceptacles (14), comprenant un boîtier (1) qui contient une batterie de refroidissement (5) pour refroidir un gaz, des moyens (7) pour produire une circulation de gaz refroidi et un dispositif pour produire un écoulement de gaz refroidi et un dispositif pour produire des jets de l'écoulement de gaz refroidi, qui sont dirigés vers l'extérieur des réceptacles (14), **caractérisé en ce que** le dispositif de production de jets comprend une pluralité de coques (6), chacun des réceptacles étant insérés dans l'une des coques, chacune des coques entourant complètement l'un des réceptacles (14) à l'exception d'une première ouverture (15) pour l'insertion du réceptacle respectif, et une seconde ouverture (16) pour évacuer l'écoulement de gaz résultant des jets dirigés vers l'extérieur du réceptacle respectif, et chaque coque comportant des trous (18) formés dans l'ensemble de ses parois latérales dans des zones directement opposées au réceptacle respectif inséré dans la coque de manière à diriger les jets vers l'extérieur du réceptacle respectif, les coques étant installées dans une paroi de séparation (9) de telle sorte que les moyens (7) de production de l'écoulement de gaz font circuler le gaz dans la chambre; qui traverse la batterie de refroidissement (5) et par conséquent traverse chacune des coques pour revenir aux moyens (7) de production d'écoulement de gaz.

2. Congélateur selon la revendication 1, **caractérisé en ce que** chacune des coques (6) possède une soupape (17) pour augmenter la section transversale de la seconde ouverture (16) en liaison avec l'insertion de l'un des réceptacles (14) dans la coque respective (6) de telle sorte que l'écoulement de gaz dans chacune des coques est essentiellement indépendant du fait que la coque contient l'un des réceptacles ou non.

3. Congélateur selon la revendication 1 ou 2, **caractérisé en ce que** la première ouverture (15) est fermée d'une manière essentiellement étanche par l'un des réceptacles (14) inséré en elle.

4. Congélateur selon l'une quelconque des revendications 1 à 3, dans lequel les réceptacles (14) possèdent une section transversale essentiellement rectangulaire, **caractérisé en ce que** chacune des coques (6) possède des barres de renfort (20) destinées à venir en butée contre des côtés larges opposés du réceptacle respectif (14).

5. Congélateur selon la revendication 2, **caractérisé par** un indicateur (13) pour indiquer pour chacune des coques (6) si elle est vide ou contient l'un des réceptacles (14) et, dans ce dernier cas, pour indiquer quand le réceptacle a été dans la coque pendant un intervalle de temps prédéterminé.

6. Congélateur selon l'une quelconque des revendications 1 à 5, **caractérisé par** des moyens pour débrancher les moyens (7) pour créer un écoulement de gaz pendant l'insertion de l'un des réceptacles (14) dans le congélateur ou pendant le retrait de l'un des réceptacles à partir du congélateur.

7. Congélateur selon l'une quelconque des revendications 1 à 6, **caractérisé par** un transducteur de température pour le gaz refroidi par la batterie de refroidissement (5) et un indicateur pour indiquer quand une température prédéterminée a été atteinte.

8. Congélateur selon l'une quelconque des revendications 1 à 7, **caractérisé par** un transducteur de pression pour la chute de pression dans les coques (6) pour indiquer le moment où une chute de pression prédéterminée a été atteinte.

9. Congélateur selon l'une quelconque des revendications 1 à 8, **caractérisé par** une boîte perméable à l'air, dans laquelle un sac en matière plastique contenant un liquide peut être inséré, laquelle boîte peut à son tour être insérée dans au moins l'une des coques (6) en tant que l'un des réceptacles.

10. Congélateur selon l'une quelconque des revendications 1 à 9, **caractérisé en ce qu'**au moins l'une des coques (6) peut être complètement ou partiellement retirée du boîtier pour être remplacée par une autre coque.
